# EUROPÄISCHE PATENTSCHRIFT

(11) **EP 1 810 567 B1**
(45) Veröffentlichungstag und Bekanntmachung des Hinweises auf die Patenterteilung: **08.08.2012**
(21) Anmeldenummer: 07100384.2
(22) Anmeldetag: 11.01.2007
(51) Int. Cl.: A01M 7/00

(54) **Vorrichtung zur Steuerung der Bewegung eines quer zur Fahrtrichtung verlaufenden Trägers einer landwirtschaftlichen Maschine**
Device for controlling the movement of an arm mounted transversely to the moving direction of an agricultural machine
Dispositif pour contrôler le mouvement d'un bras monté transversalement par rapport à la direction de déplacement d'une machine agricole

(30) Priorität: 24.01.2006 DE 102006003544
(43) Veröffentlichungstag der Anmeldung: 25.07.2007
(73) Patentinhaber: John Deere Fabriek Horst B.V., 5961 PT Horst (NL)
(72) Erfinder: Hiddema, Joris, 5925 NB, Blerick (NL)
(74) Vertreter: Holst, Sönke

(56) Entgegenhaltungen:
- EP-A- 0 429 934
- DE-A1- 2 944 944
- DE-A1- 3 204 189
- DE-A1- 3 739 305

## Beschreibung

Die Erfindung betrifft eine Vorrichtung zur Steuerung der Bewegung eines quer zur Fahrtrichtung verlaufenden Trägers einer landwirtschaftlichen Maschine, insbesondere eines Spritzgestänges, der um eine Achse bis zur Anlage an einem Anschlag schwenkbar ist, wobei der Anschlag entgegen einer Kraft unter dem Einfluss des Trägers bewegbar ist.

Bekannte landwirtschaftliche Spritzgeräte weisen einen mittigen Träger auf, der zu jeder Seite ein Spritzgestänge horizontal schwenkbar aufnimmt. Das Spritzgestänge wird normalerweise mittels eines Hydraulikmotors zwischen einer Transport- und einer Spritzstellung verschwenkt, wobei das seitliche Spritzgestänge in der Spritzstellung an dem mittleren Spritzgestänge zur Anlage kommt. Aufgrund der Erschütterungen bei der Fahrt über das Feld findet eine Bewegung des gesamten Spritzgestänges um eine mittige, vertikale Achse statt, oder jedes seitliche Spritzgestänge bewegt sich unabhängig von dem anderen um seine jeweilige Achse.

Die EP 0 429 934 A1 offenbart ein landwirtschaftliches Spritzgerät mit einem Verteilergestänge, welches sich beidseitig des Gerätes quer zur Fahrtrichtung erstreckt, wobei die beidseitigen Verteilerarme an einem Rahmenmittelteil schwenkbar angeordnet sind. Zur Federung und Begrenzung von vertikalen Pendelbewegungen der Verteilerarme sind gefederte Anschläge vorgesehen, die mit den jeweiligen Verteilerarmen in Eingriff treten. Zur Federung von in Fahrtrichtung gerichtete Pendelbewegungen der Verteilerarme sind in nicht näher beschriebener Weise Dämpfungselemente vorgesehen. Die in Fahrtrichtung gerichtete Pendelbewegungen der Verteilerarme werden so zwar abgefedert, können zum einen jedoch relativ große Wege einnehmen und zum anderen große Momente im Verteilergestänge hervorrufen.

Das der Erfindung zugrundeliegende Problem wird darin gesehen, dass diese Bewegungen relativ groß sind und die Spritzgenauigkeit negativ beeinträchtigen, woran sich auch nichts ändert, wenn die Anlage des Spritzgestänges über eine elastische Zwischenlage erfolgen würde.

Dieses Problem wird in erfinderischer Weise durch die Merkmale des Patentanspruchs 1 gelöst, wobei in den davon abhängigen Patentansprüchen vorteilhafte Weiterbildungen definiert sind.

Erfindungsgemäß ist eine Vorrichtung der eingangs genannten Art derart ausgebildet, dass der Anschlag an einem Schenkel eines zweischenkeligen Hebels angebracht ist, wobei die Schenkel des Hebels unterschiedlich lange sind und der Anschlag an dem kürzeren Schenkel vorgesehen ist.

Auf diese Weise kann eine Bewegung des Spritzgestänges über die eigentliche Spritzstellung hinaus abgefedert und nicht ungedämpft reflektiert werden. Die Momente in dem Spritzgestänge um die Achse werden reduziert Bei der Maschine kann es sich um eine Feldspritze, ein Gemüseförderband oder dergleichen handeln.

Wenn der Anschlag an einem zweischenkligen Hebel gebildet ist, kann durch die Wahl der Länge der Schenkel Einfluss auf die erforderliche Gegenkraft genommen werden. In gleicher Weise kann die gesamte Vorrichtung sensibel oder weniger sensibel ausgebildet werden.

Die Kraft zum Gegenhalten an den Träger kann je nach den Anforderungen mechanisch, z. B. durch Spiral- Blatt- oder Tellerfedern aufgebracht werden.

Um zu vermeiden, daß der Kraftspeicher, z. B. eine Feder und mit ihr das Spritzgestänge in einen instabilen Zustand geraten, ist ein Stoßdämpfer vorgesehen

Weil die Schenkel des Hebels unterschiedlich lang sind, kann über das Längenverhältnis und die damit einhergehende Lage der Schwenkachse die Kraft geändert werden, mit der der Träger angehalten und zurückgeführt wird. Erfindungsgemäß befindet sich der Anschlag an dem kürzeren Schenkel, Sodass eine hohe Kraft mit einer geringen Kraft aufgefangen werden kann.

Wenngleich der Träger auch manuell in seine Spritzstellung gebracht werden könnte, so ist eine Verstellung mittels eines Hydraulikmotors oder dergleichen und der damit einhergehenden Steuerungsmöglichkeit doch vorteilhafter, zumal sie von einem Zugfahrzeug aus eingeleitet werden kann.

Wenn der Stellmotor selbst intern mit einem Kraftspeicher, z. B. einer mechanischen Feder oder einem Gasakkumulator versehen ist, oder über einen solchen an einem Rahmen angreift, kann er den Träger unter Vorspannung an den Anschlag anlegen und ihn somit sicher in seiner Betriebsstellung halten. Sind mehrere Stellmotoren mit Kraftspeichern vorgesehen, können diese als jeweils ein auf zwei Seiten wirkender Stellmotor und als ein gemeinsamer Kraftspeicher ausgebildet werden.

Bei einem Längenverhältnis der Schenkel von 1:2 bis 1:4, vorzugsweise 1:2,5 ist es möglich, den Kraftspeicher für den Anschlag so klein auszubilden, daß er noch räumlich gut untergebracht werden kann. Gleichermaßen könnte anstatt der Schenkel auch zwei in Reihe geschaltet werden, die jedoch unterschiedliche Kolbenquerschnitte aufweisen.

Landwirtschaftliche Spritzen mit einem Spritzgestänge von 30 - 60 Meter und mehr Breite unterliegen hohen Schwenkbewegungen, die mit einer Vorrichtung nach einem oder mehreren der obigen Ansprüche sehr vorteilhaft aufgefangen werden können.

In der Zeichnung ist ein nachfolgend näher beschriebenes Ausführungsbeispiel der Erfindung gezeigt. Es zeigt:
- Figur 1: eine landwirtschaftliche Spritze mit einer Vorrichtung zur Steuerung der Bewegung eines Trägers,
- Figur 2: die Vorrichtung nach Figur 1 in einer Ansicht von oben und

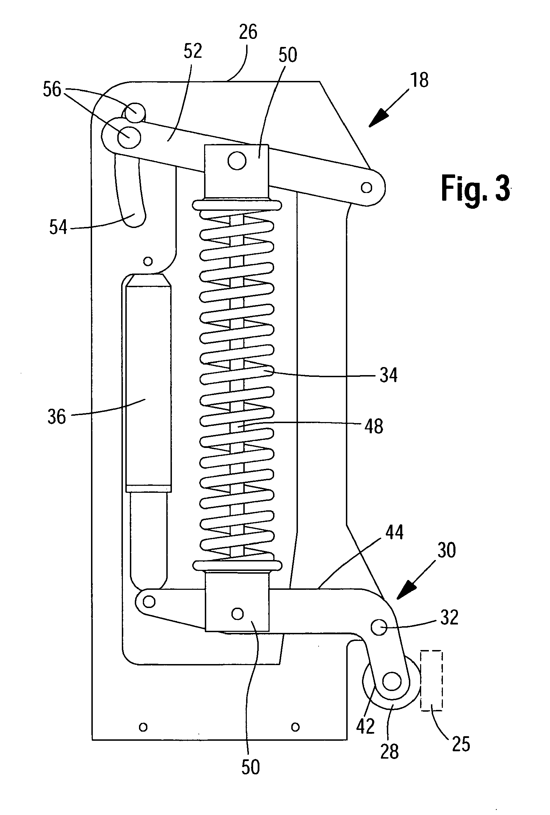

- Figur 3: die Vorrichtung nach Figur 1 in einer Ansicht von hinten.

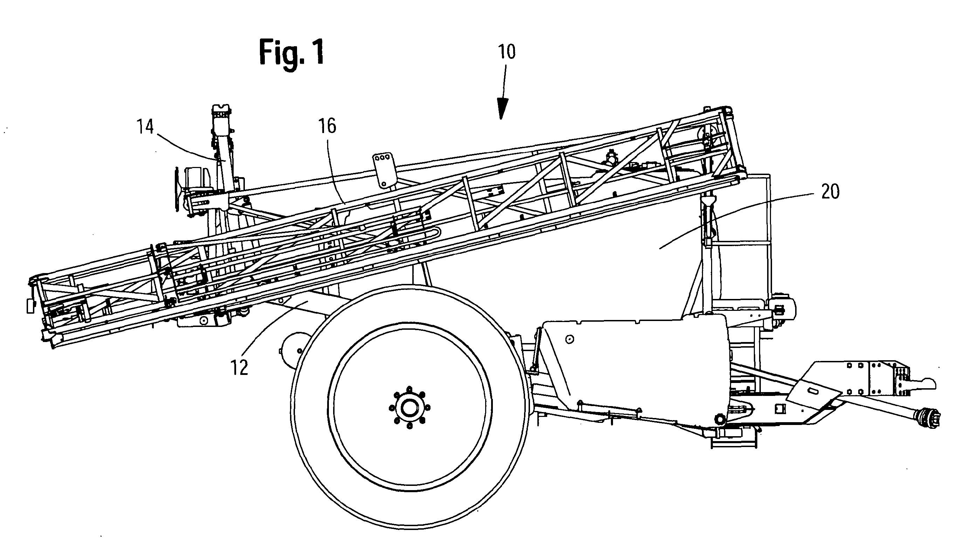

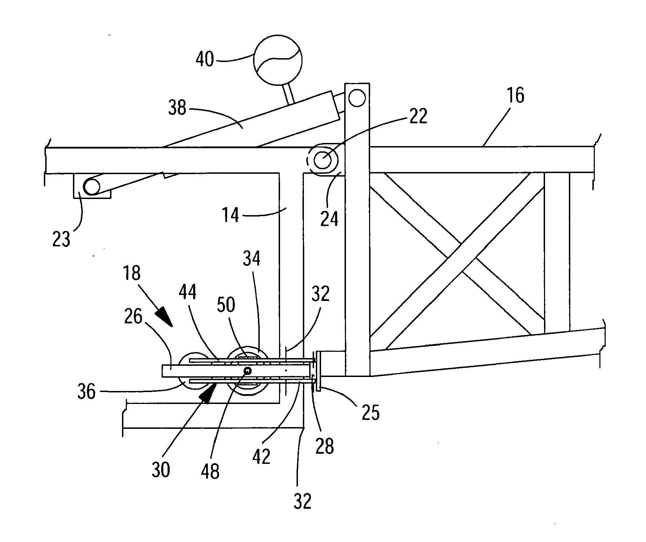

Eine in Figur 1 gezeigte Spritze 10 enthält einen Rahmen 12, eine Aufhängung 14, einen Träger 16 und eine Vorrichtung 18 zur Steuerung der Bewegung des Trägers 16.

Die Spritze 10 ist hier als eine gezogene Spritze dargestellt, die hinter einem Ackerschlepper oder dergleichen über ein Feld gezogen werden kann; sie könnte genauso gut an die Dreipunktkupplung eines Ackerschleppers angeschlossen oder als selbstfahrende Spritze ausgebildet werden.

Der Rahmen 12 trägt einen Tank 20 und ist an seinem rückwärtigen Endbereich mit der Aufhängung 14 ausgerüstet, die den Träger 16 vertikal verstellbar aufnimmt und erforderlichenfalls mit nicht gezeigten Vorrichtungen zum Steuern der absoluten und der relativen Höhe versehen ist.

Die Aufhängung 14 weist seitlich jeweils eine Achse 22 auf, die im Wesentlichen vertikal ausgerichtet ist. In einem der Längsmittenebene der Spritze 10 zugelegenen Bereich befindet sich jeweils ein Halter 24, der als eine Lasche oder dergleichen ausgebildet sein kann.

Der Träger 16 wird bei diesem Ausführungsbeispiel von einem Spritzgestänge gebildet, das an einem innenliegenden Endbereich mit Lageraugen 24 versehen ist, die auf der Achse 22 schwenkbar aufgenommen sind, wobei er eine Schwenkbewegung von ca. 90 Grad zwischen einer in der Fahrtrichtung verlaufenden Stellung in eine quer zur Fahrtrichtung verlaufende Stellung ausführen kann. Der Träger 16 kann z. B. zehn und mehr Meter lang sein, so daß er während des Betriebs an seinem frei auskragenden Ende aufgrund von Beschleunigungen der Spritze 10 bemerkenswerte Schwenkbewegungen ausführen wird. Der Träger 16 weist in dem Bereich der Lageraugen 24 einen Anleger 25 auf, der starr, wenn auch möglicherweise einstellbar, an ihm angebracht ist.

Die Vorrichtung 18 ist an der Aufhängung 14 angebracht und enthält einen Rahmen 26, einen Anschlag 28, einen zweischenkligen Hebel 30, ein Lager 32, einen Kraftspeicher 34, einen Stoßdämpfer 36, einen Stellmotor 38 und einen Kraftspeicher 40.

Es ist die Aufgabe der Vorrichtung 18, den Träger 16 sowohl in seiner quer zur Fahrtrichtung verlaufenden Betriebsstellung zu halten, als auch nach vorne oder hinten gerichtete Bewegungen zu dämpfen. Da an jeder Seite der Aufhängung 14 ein Träger 16 angebracht ist, ist auch vorzugsweise auf jeder Seite eine Vorrichtung 18 vorgesehen.

Der Rahmen 26 ist als ein Schweißzusammenbau käfigförmig ausgebildet, der die Vorrichtung 18 als eine bauliche Einheit zusammengefasst und an die Aufhängung 14 angebracht werden kann. Im Rahmen einer kinematischen Umkehr könnte die Vorrichtung auch an dem Träger 16 statt an der Aufhängung 14 angebracht werden.

Der Anschlag 28 ist in diesem Ausführungsbeispiel als eine auf einer Schraube gelagerte Rolle ausgebildet, die an dem Hebel 30 gehalten wird. Der Anschlag 28 ist so ausgebildet und angeordnet, daß der Anleger 25 an ihm anliegt, wenn sich der Träger 16 in seiner Betriebsstellung befindet. Der Anschlag 28 erstreckt sich in der Fahrtrichtung.

Der Hebel 30 ist aus zwei identischen und einen Abstand zueinander aufweisenden Teilen ausgebildet, die miteinander verbunden sind und eine starre Einheit bilden. Er setzt sich aus einem kurzen Schenkel 42 und einem langen Schenkel 44 zusammen, in deren Schnittpunkt sich eine Schwenkachse in der Form des Lagers 32 befindet, das sich ebenfalls in der Fahrtrichtung erstreckt. Der Anschlag 28 befindet sich im freien Endbereich des kurzen Schenkels 42, der vertikal oder ziemlich vertikal verläuft, jedenfalls quer zur Bewegungsrichtung des Trägers 16 um die Achse 22. Der lange Schenkel 44 schließt an den kurzen Schenkel 42 in diesem Ausführungsbeispiel ca. unter einem rechten Winkel an, was jedoch lediglich aufgrund des geometrischen Umfelds so gewählt ist. In diesem Fall beträgt das Längenverhältnis der beiden Schenkel 1:2,5, wobei unter der Länge jeweils der Abstand der Kraftangriffslinien zu dem Lager 26 verstanden wird.

Der Kraftspeicher 34 wird von einer Schraubendruckfeder gebildet, die sich einenends - unten - auf dem langen Schenkel 44 und anderenends - oben - an dem Rahmen 26 abstützt. Um den Kraftspeicher zu spannen, ist eine Schraube 48 vorgesehen, seine Lagesicherung erfolgt über Gabelelemente 50 mit nicht gezeigten konusförmigen Tellerplatten, und die Spannung des Kraftspeichers 34 wird mittels eines Schwenkhebels 52 gesteuert, dessen freier Endbereich in einem Langloch 54 bewegbar und dessen Lage mit einer Stellvorrichtung 56 veränderbar ist.

Der Stoßdämpfer 36 verläuft parallel zu der Wirkachse des Kraftspeichers 34 und ist unten mit dem Hebel 30 und oben mit dem Rahmen 26 auf Zug und Druck verbunden. Der Stoßdämpfer 36 wirkt auf die Geschwindigkeitsänderungen und hat die Aufgabe, die Bewegungen des Kraftspeichers 34 zu dämpfen und zu reduzieren.

Sowohl der Kraftspeicher 34, als auch der Stoßdämpfer 36 wirken in einer vertikalen Ebene und im Wesentlichen senkrecht auf den langen Schenkel 44, so daß sie ein Moment um das Lager 32 aufbauen.

Der Stellmotor 38 ist als ein Hydraulikmotor ausgebildet, der in beiden Richtungen mit Druckmittel beaufschlagt wird und einenends an dem Halter 23 und anderenends an dem Träger 16 jeweils schwenkbar angeschlossen. Der Stellmotor 38 ist mit einem Kraftspeicher 40 verbunden, der in jeder Stellung des Stellmotors 38 den Kolben in geringem Maß nachgiebig lagert. Genauso gut könnte der Stellmotor 38 über eine Feder an dem Halter 23 angebracht sein. In diesem Fall ist der Kraftspeicher 40 als ein Gasdruckspeicher ausgebildet.

Nach alledem ergibt sich folgende Funktion.

Um den bzw. die Träger 16 in eine Betriebsstellung zu bringen, werden die Stellmotoren 38 ausgefahren, wobei am Hubende der Anleger 25 an den Anschlag 28 anschlägt und somit gehalten wird. In diesem Zustand wirkt der mit dem Stellmotor 38 zusammenwirkende Kraftspeicher 40 einerseits auf den Anleger 25 und somit auf den Träger 16, während andererseits der Anschlag 28 unter der Spannung des Kraftspeichers 34 eine Kraft auf den Anleger 25 auswirkt. Wird z. B. aufgrund einer nach vorne gerichteten Beschleunigung der Spritze 10 und der Massenträgheit der Träger 16 nach hinten bewegt, schwenkt der Träger 16 um die Achse 22 nach hinten und drückt den Anleger 25 gegen den Anschlag 28. Der Anschlag 28 schwenkt mit dem kurzen Schenkel 42 um das Lager 32, wobei der lange Schenkel 44 mitbewegt und gegen den Kraftspeicher 34 und den Stoßdämpfer 36 wirkt. Aufgrund der Übersetzung bedingt durch die unterschiedlichen Abmessungen der Schenkel 42, 44 reicht die bedingt große Gegenkraft des Kraftspeichers 34 aus, den Träger 16 zurückzudrängen.

## Patentansprüche

1. Vorrichtung zur Steuerung der Bewegung eines quer zur Fahrtrichtung verlaufenden Trägers (16) einer landwirtschaftlichen Maschine (10), insbesondere eines Spritzgestänges, der um eine Achse (22) bis zur Anlage an einem Anschlag (28) schwenkbar ist, wobei der Anschlag (28) entgegen einer Kraft unter dem Einfluss des Trägers (16) bewegbar ist, **dadurch gekennzeichnet, dass** der Anschlag (28) an einem Schenkel (42) eines zweischenkligen Hebels (30) angebracht ist, wobei die Schenkel (42, 44) des Hebels (30) unterschiedlich lange sind und der Anschlag (28) an dem kürzeren Schenkel (42) vorgesehen ist.

2. Vorrichtung nach Anspruch 1, **dadurch gekennzeichnet, daß** die auf den Anschlag (28) wirkende Kraft von einem mechanischen, hydraulischen oder pneumatischen Kraftspeicher (34) aufgebracht wird.

3. Vorrichtung nach Anspruch 2, **dadurch gekennzeichnet, daß** dem Kraftspeicher (34) ein Stoßdämpfer (36) zugeordnet ist,

4. Vorrichtung nach einem oder mehreren der vorherigen Ansprüche, **dadurch gekennzeichnet, daß** die Bewegung des Trägers (16) mittels eines fremdkraftbetriebenen Stellmotors (38) erfolgt.

5. Vorrichtung nach Anspruch 4 **dadurch gekennzeichnet, daß** der Stellmotor (38) mit einem Kraftspeicher (40) versehen oder verbunden ist.

6. Vorrichtung nach einem oder mehreren der vorherigen Ansprüche, **dadurch gekennzeichnet, daß** das wirksame Längenverhältnis der Schenkel (42, 44) 1:2 bis 1:4, vorzugsweise 1:2,5 beträgt.

7. Landwirtschaftliche Spritze mit einer Vorrichtung nach einem oder mehreren der obigen Ansprüche.

## Claims

1. Device for controlling the movement of a support (16), extending transversely to the direction of travel, of an agricultural machine (10), in particular of a spray boom, which is pivotable about an axis (22) until it butts against a stop (28), wherein the stop (28) is movable counter to a force under the influence of the support (16), **characterized in that** the stop (28) is fitted to one arm (42) of a two-arm lever (30), wherein the arms (42, 44) of the lever (30) have different lengths and the stop (28) is provided on the shorter arm (42).

2. Device according to Claim 1, **characterized in that** the force acting on the stop (28) is applied by a mechanical, hydraulic or pneumatic energy accumulator (34).

3. Device according to Claim 2, **characterized in that** the energy accumulator (34) is assigned a shock absorber (36).

4. Device according to one of more of the preceding claims, **characterized in that** the support (16) is moved by means of an externally powered servo motor (38).

5. Device according to Claim 4, **characterized in that** the servo motor (38) is provided with or connected to an energy accumulator (40).

6. Device according to one or more of the preceding claims, **characterized in that** the effective length ratio of the arms (42, 44) is 1:2 to 1:4, preferably 1:2.5.

7. Agricultural sprayer having a device according to one or more of the preceding claims.

## Revendications

1. Dispositif de commande du mouvement d'un bras (16) d'une machine agricole (10) s'étendant transversalement à la direction de déplacement, en particulier d'une tringlerie de pulvérisation, qui peut pivoter autour d'un axe (22) jusqu'à venir en appui contre une butée (28), la butée (28) pouvant être déplacée à l'encontre d'une force sous l'influence du bras (16), **caractérisé en ce que** la butée (28) est montée sur une branche (42) d'un levier (30) à deux branches, les branches (42, 44) du levier (30) ayant des longueurs différentes et la butée (28) étant prévue sur la branche (42) la plus courte.

2. Dispositif selon la revendication 1, **caractérisé en ce que** la force agissant sur la butée (28) est appliquée par un accumulateur de force mécanique, hydraulique ou pneumatique (34).

3. Dispositif selon la revendication 2, **caractérisé en ce que** l'on associe à l'accumulateur de force (34) un amortisseur de chocs (36).

4. Dispositif selon l'une quelconque ou plusieurs des revendications précédentes, **caractérisé en ce que** le déplacement du bras (16) s'effectue au moyen d'un moteur de réglage (38) entraîné par une force extérieure.

5. Dispositif selon la revendication 4, **caractérisé en ce que** le moteur de réglage (38) est pourvu d'un accumulateur de force (40) ou est connecté à un accumulateur de force (40).

6. Dispositif selon l'une quelconque ou plusieurs des revendications précédentes, **caractérisé en ce que** le rapport de longueur effectif des branches (42, 44) est de 1:2 à 1:4, de préférence de 1:2,5.

7. Pulvérisateur agricole comprenant un dispositif selon l'une quelconque ou plusieurs des revendications précédentes.
